Europäisches Patentamt

European Patent Office

Office européen des brevets

(11) Veröffentlichungsnummer: **0 045 387**
**A1**

# (12) EUROPÄISCHE PATENTANMELDUNG

(21) Anmeldenummer: **81105301.6**

(22) Anmeldetag: **08.07.81**

(51) Int. Cl.³: **C 08 G 65/44**

(30) Priorität: **01.08.80 DE 3029208**

(43) Veröffentlichungstag der Anmeldung:
**10.02.82 Patentblatt 82/6**

(84) Benannte Vertragsstaaten:
**AT BE CH DE FR GB LI NL**

(71) Anmelder: **BASF Aktiengesellschaft
Carl-Bosch-Strasse 38
D-6700 Ludwigshafen(DE)**

(72) Erfinder: **Brandstetter, Franz, Dr.
Ritterbuechel 45
D-6730 Neustadt(DE)**

(72) Erfinder: **Schuster, Hans, Dr.
Luitpoldstrasse 166
D-6700 Ludwigshafen(DE)**

(72) Erfinder: **Naarmann, Herbert, Dr.
Haardtblick 15
D-6719 Wattenheim(DE)**

(54) **Verfahren zur Herstellung von Polyphenylenäthern.**

(57) Die Erfindung betrifft ein Verfahren zur Herstellung hochmolekularer Polyphenylenäther aus einwertigen Phenolen, die in den beiden ortho-Stellungen, nicht aber in der para-Stellung Alkylsubstituenten aufweisen, durch oxidative Kupplungsreaktion mit Sauerstoff bei Temperaturen zwischen 25 und 50°C in Anwesenheit eines üblichen Katalysatorkomplexes aus einem Kupfersalz und einem organischen Amin in Gegenwart eines Lösungsmittels, wobei man als Lösungsmittel einen (cyclo)aliphatischen $C_5$- bis $C_{10}$-Kohlenwasserstoff, bevorzugt Cyclohexan, verwendet.

EP 0 045 387 A1

Verfahren zur Herstellung von Polyphenylenäthern

Die Erfindung betrifft ein Verfahren zur Herstellung hochmolekularer Polyphenylenäthern aus einwertigen Phenolen, die in den beiden ortho-Stellungen, nicht aber in der para-Stellung Alkylsubstituenten aufweisen durch oxidative Kupplungsreaktion mit Sauerstoff bei Temperaturen zwischen 25 und 50°C in Anwesenheit eines Katalysatorkomplexes aus einem Kupfersalz und einem organischen Amin in Gegenwart eines Lösungsmittels im Bereich von 1:1 bis 20:1 Gewichtsteilen, bezogen auf das monomere Phenol und gegebenenfalls eines Aktivators.

Bei derartigen Verfahren zur Selbstkondensation einwertiger Phenole durch Einwirken von Sauerstoff sind Katalysatorsysteme erforderlich, die in Gegenwart eines Lösungsmittels die oxidative Kupplungsreaktion in Gang bringen.

Es ist bekannt, zur Erfüllung dieser Erfordernisse in aromatischen Lösungsmitteln wie Benzol oder Toluol die Reaktion in Anwesenheit eines Katalysatorkomplexes aus Kupfer-II-Salzen und einem geradkettigen aliphatischen Amin sowie einem niedermolekularen Alkylalkohol durchzuführen (vgl. US-PS 3 661 848). Nach Beendigung der Reaktion wird die das Polymere enthaltende Aromatenlösung mit etwa der 10-fachen Menge Methanol versetzt, das ausgefällte Polymere abfiltriert, mit Methanol gewaschen und bei 70°C im Vakuum getrocknet.

Dieser bisher ausgeübte Reaktionsweg weist neben dem Nachteil der Polymerenausfällung mit einem großen Überschuß an Fällungsmittel auch den Nachteil des Abtrennens und Auswaschens des Katalysators, der als löslicher Komplex homogen im Polymeren verteilt ist, z.B. mit Cu-Werten >10 ppm Fre/BL

und Amin-Werten (bestimmt als Gew.% N)  0,1 Gew.%,
auf.

Der Erfindung lag die Aufgabe zugrunde, durch Abändern der Polymerisationsbedingungen direkt bei der Polymerisation mit hoher Ausbeute ein Fällungspolymerisat zu erhalten, das abfiltrierbar und praktisch katalysatorfrei ist.

Diese Aufgabe wird erfindungsgemäß dadurch gelöst, daß als Lösungsmittel ein (cyclo)aliphatischer $C_5$- bis $C_{10}$-Kohlenwasserstoff verwendet wird. Bevorzugte Kohlenwasserstoffverbindung ist das Cyclohexan, nach besonders bevorzugter Verfahrensweise wird das Lösungsmittel im Bereich von 1:1 bis 10:1 Gewichtsteilen, bezogen auf das monomere Phenol, verwendet.

Unter hochmolekularen Polyphenylenäthern werden die durch oxidative Kupplung von 2,6-Dialkylphenol zu einer Kette alkylsubstituierter, in para-Stellung durch Sauerstoffatome ätherartig gebundene Benzolringe verstanden. Die Polymeren weisen Molekulargewichte von 5 000 bis 30 000, bevorzugt 10 000 bis 25 000, bestimmt nach "Macromolecular Syntheses" 1 (1978), Seite 83, auf. Hochmolekulare Polyphenylenäther, auch Poly(phenylenoxide) genannt, sind an sich aus der Literatur seit längerem bekannt (vgl. z.B. US-PS 3 661 848; US-PS 3 219 625 oder US-PS 3 378 505), so daß sich hier eine weitere Beschreibung erübrigt.

Die zur Herstellung der hochmolekularen Polyphenylenäther verwendeten einwertigen Phenole, die in den beiden ortho--Stellungen, nicht aber in der para-Stellung Alkylsubstituenten aufweisen, sind übliche Phenole wie 2,6-Dimethylphenol, 2,6-Diäthylphenol, 2-Methyl-6-äthylphenyl, 2-Methyl-6-propylphenol, 2,6-Dibutylphenol, 2,3,6-Trimethylphenol sowie Gemische dieser Phenole.

Zur Ausführung der Polykondensation wird üblicherweise Sauerstoffgas in die 25 bis 50, vorzugsweise 30 bis 35°C warme Lösung des Monomeren in Gegenwart eines Katalysatorkomplexes eingeleitet. Die Sauerstoffdurchflußgeschwindigkeit ist im wesentlichen die gleiche, wie sie in den US-Patentschriften 3 306 874 und 3 306 875 beschrieben sind.

Bei dem für die Polykondensation bekannten Katalysatorkomplex handelt es sich um eine Kombination aus einem Amin, z.B. n-Dibutylamin, Diäthylamin, Picolin, Chinolin, Pyridinbasen, Triisopropylamin, Dimethylisopropanolamin, Triäthanolamin, Triisopropanolamin oder Diisopropanolamin mit einem Kupfersalz wie Kupfer-I-Bromid, Kupfer-I-Chlorid, Kupfer-I-Jodid, Kupfer-II-Acetat, Kupfer-II-Propionat, Kupfer-II-Acetessigester oder Kupfer-II-Acetylacetonat. Ein bevorzugter Bereich bei der Menge der eingesetzten Amine liegt bei 2,0 bis 25,0 Mol pro 100 Mol des Monomeren, die Konzentration der Amine kann aber in der Reaktionsmischung innerhalb weiter Grenzen variieren, zweckmäßig sind jedoch niedere Konzentrationen. Die Konzentration der Kupfersalze wird gering gehalten und variiert vorzugsweise von 0,2 bis 2,5 Mol pro 100 Mol des Monomeren.

Der Anteil des Lösungsmittels liegt üblicherweise im Bereich von 1:1 bis 20:1, d.h. maximal bis zu einem Überschuß des 20-fachen am Lösungsmittel, bezogen auf das Monomere.

Darüberhinaus kann die Reaktionsmischung einen Aktivator wie ein Diarylguanidin oder ein Diarylformamidin enthalten (vgl. US-PS 3 544 515).

Nach erfindungsgemäßem Verfahren soll als Lösungsmittel ein (cyclo)aliphatischer $C_5$- bis $C_{10}$-Kohlenwasserstoff verwendet werden. Geeignete Kohlenwasserstoffe sind insbe-

sondere Cyclohexan, n-Oktan, n-Dekan oder deren Gemische, wobei vorzugsweise Cyclohexan verwendet wird. Die erfindungsgemäß verwendeten Lösungsmittel sind für die Monomeren gute Lösungsmittel, für die erhaltenen Polymeren dagegen wirken sie als Fällungsmittel. Die Lösungsmittel werden bevorzugt im Bereich von 1:1 bis 10:1 Gewichtsteilen, bezogen auf das monomere Phenol, eingesetzt.

Die mit der Erfindung erzielten Vorteile bestehen insbesondere darin, daß man in einem Arbeitsgang ein Fällungspolymerisat erhält, das leicht abfiltrierbar und katalysatorfrei ist. Bei dieser Polymerisationstechnik wird außerdem das Polymere in Ausbeuten von größer als 90 Gewichtsprozent, bezogen auf das eingesetzte Monomer, erhalten.

Die Erfindung wird durch die nachfolgenden Beispiele näher erläutert.

Beispiel 1

Herstellung von Poly(2,6-dimethyl-1,4-phenylen)-äther

Zu einer Vorlage von 1,3 g Cu-I-Bromid und 33 g Dibutylamin werden 2 g 2,6-Dimethylphenol gegeben und bei 30°C 5 Minuten unter Einleiten von Sauerstoff gerührt, dann wird im Verlauf von 30 Minuten eine Lösung von 204 g 2,6-Dimethylphenol in 1 400 ml Cyclohexan eindosiert, anschließend wird noch 1 Stunde bei 33°C gerührt. Die Reaktion wird in Gegenwart von 30 Liter/Stunde Sauerstoff durchgeführt.

Nach Beendigung der Reaktion wird das ausgefallene Polymerisat abfiltriert und 2 mal mit 100 ml Methanol gewaschen. Das erhaltene Polymerisat hat nach dem Trocknen eine Intrinsic Viskosität $[\eta]$ von 0,3 dl/g. Die Ausbeute an Polymeren lag bei > 90 % (bezogen auf das eingesetzte Monomere). Analyse: Cu-Gehalt: 4 ppm; N-Gehalt: 0,1 Gew.%.

## Beispiel 2

Wird wie im Beispiel 1 beschrieben gearbeitet, jedoch Art und Menge der Katalysatoren variiert, so werden die in der folgenden Tabelle wiedergegebenen Resultate erhalten.

| Beispiel Nr. | Cu-Salz g wasserfrei | | Amin Art und Menge in g | | dl/g |
|---|---|---|---|---|---|
| 2 | Cu-I-Br | 1,3 | Triisopropylamin | 33 | 0,28 |
| 3 | Cu-I-Br | 1,3 | Triäthanolamin | 33 | 0,32 |
| 4 | Cu-I-Br | 1,3 | Triisopropanolamin | 33 | 0,34 |
| 5 | Cu-I-Br | 1,3 | Picolin | 33 | 0,41 |
| 6 | Cu-I-Br | 1,3 | Chinolin | 33 | 0,38 |
| 7 | Cu-I-Cl | 1,3 | n-Dibutylamin | 33 | 0,25 |
| 8 | Cu-I-J | 1,3 | n-Dibutylamin | 33 | 0,26 |
| 9 | Cu-I-Br | 2,6 | n-Dibutylamin | 33 | 0,34 |
| 10 | Cu-I-Br | 2,6 | n-Dibutylamin | 49 | 0,46 |
| 11 | Cu-II-Br | 1,3 | n-Dibutylamin | 33 | 0,35 |
| 12 | Cu-II-Br 1,3 (wasserhaltig) | | n-Dibutylamin | 33 | 0,09 |
| 13 | Cu-II-Azetat | 1,5 | Picolin | 25 | 0,37 |
| 14 | Cu-II-Propionat | 1,5 | Picolin | 25 | 0,30 |
| 15 | Cu-I-Acet-essigester | 1,5 | Picolin | 25 | 0,36 |
| 16 | Cu-II-Acetyl-acetonat | 1,5 | Picolin | 25 | 0,30 |

Patentansprüche

1. Verfahren zur Herstellung hochmolekularer Polyphenylenäther aus einwertigen Phenolen, die in den beiden
ortho-Stellungen, nicht aber in der para-Stellung
Alkylsubstituenten aufweisen, durch oxidative Kupplungsreaktion mit Sauerstoff bei Temperaturen zwischen 25 und 50°C in Anwesenheit eines Katalysatorkomplexes aus einem Kupfersalz und einem organischen
Amin in Gegenwart eines Lösungsmittels im Bereich von
1:1 bis 20:1 Gewichtsteilen, bezogen auf das monomere Phenol, und gegebenenfalls eines Aktivators,
dadurch gekennzeichnet, daß als Lösungsmittel ein
(cyclo)aliphatischer $C_5$- bis $C_{10}$-Kohlenwasserstoff
verwendet wird.

2. Verfahren nach Anspruch 1, dadurch gekennzeichnet,
daß das Lösungsmittel Cyclohexan ist.

3. Verfahren nach Anspruch 1, dadurch gekennzeichnet,
daß das Lösungsmittel im Bereich von 1:1 bis 10:1 Gewichtsteilen verwendet wird.

Europäisches
Patentamt

**EUROPÄISCHER RECHERCHENBERICHT**

**0045387**

Nummer der Anmeldung

EP 81 10 5301

| | **EINSCHLÄGIGE DOKUMENTE** | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | C 08 G 65/44 |
| X | <u>FR - A - 2 118 144</u> (ASAHI DOW)<br>* Ansprüche; Seite 8, Absatz 4 *<br><br>-- | 1-3 | |
| | CHEMICAL ABSTRACTS, Band 77, Nr. 4, 24. Juli 1972, Seite 31, Nr. 20405d<br>Columbus, Ohio, U.S.A.<br>& SU - A - 328 131 (B.M. KHLEBNIKOV et al.) 02-02-1972<br>* Zusammenfassung *<br><br>-- | 1-3 | |
| A | <u>US - A - 4 065 434</u> (T.F. RUTLEDGE)<br>* Ansprüche; Spalte 2, Zeilen 64-65 *<br><br>-- | 1 | RECHERCHIERTE SACHGEBIETE (Int. Cl.³)<br><br>C 08 G 65/44<br>65/46 |
| A | CHEMICAL ABSTRACTS, Band 85, Nr. 6, 9. August 1976, Seite 41, Nr. 33975e<br>Columbus, Ohio, U.S.A.<br>& JP - A - 76 37998 (HITACHI CHE- MICAL CO., LTD.) 30-03-1976<br>* Zusammenfassung *<br><br>---- | 1 | |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 28-10-1981 | DERAEDT |

EPA form 1503.1   06.78